# EUROPEAN PATENT APPLICATION

(11) **EP 2 955 681 A1**
(43) Date of publication of application: **16.12.2015**
(21) Application number: 15170939.1
(22) Date of filing: 08.06.2015
(51) Int. Cl.: G06Q 30/04, G06Q 30/06, G06Q 20/04, G06Q 20/20, G07G 5/00

(54) **SALES DATA PROCESSING APPARATUS AND SALES DATA PROCESSING METHOD**

(30) Priority: 09.06.2014 JP 2014118655
(71) Applicant: Toshiba TEC Kabushiki Kaisha, Tokyo 141-0032 (JP)
(72) Inventor: MATSUMOTO, Yuki, Shinagawa-ku, Tokyo 141-0032 (JP)
(74) Representative: Takeuchi, Maya

(57) **Abstract**

A sales data processing apparatus includes a module configured to acquire a customer code of a consumer involved in a transaction, a data generation module configured to generate receipt data which contains the customer code and indicates details of the transaction, if the customer code is acquired, and receipt data which does not contain the customer code, if the customer code is not acquired, and an output module. The output module is configured to output the receipt data according to a printing command relating to the printing of the receipt data if the receipt data does not contain the customer code, and convert the receipt data and the printing command into structured electronic receipt information and then output the converted information to an external device if the receipt data contains the customer code.

## Description

### FIELD

Embodiments described herein relate generally to a sales data processing apparatus and a sales data processing method.

### BACKGROUND

An electronic receipt system converts a receipt that is to be given to a customer from a store during a purchase transaction into electronic data and sends the electronic data to a portable terminal and the like of the customer. Because a purchase activity of the customer can be managed electronically, the customer may manage the purchase activity more efficiently. Further, because a paper receipt need not be printed, a store may be able to reduce printing cost of paper receipts.

It would be desirable if an image of the electronic receipt is similar to or the same as an image of the paper receipt, because the customer may be more familiar with paper receipts.

To this end, there is provided a sales data processing apparatus comprising:a module configured to acquire a customer code of a consumer involved in a transaction; a data generation module configured to generate receipt data which contains the customer code and indicates details of the transaction, if the customer code is acquired, and receipt data which does not contain the customer code, if the customer code is not acquired; and an output module configured to output the receipt data according to a printing command relating to the printing of the receipt data if the receipt data does not contain the customer code, and convert the receipt data and the printing command into structured electronic receipt information and then output the converted information to an external device if the receipt data contains the customer code.

Preferably, the output module is further configured to analyze the printing command, which designates a character size of one or more characters in the receipt data, and convert the receipt data and the printing command based on the analysis, if the receipt data contains the customer code.

Preferably, the output module is further configured to analyze the printing command, which designates a color of one or more characters in the receipt data, and convert the receipt data and the printing command based on the analysis, if the receipt data contains the code.

Preferably, the output module is further configured to analyze the printing command, which commands to underline one or more characters in the receipt data, and convert the receipt data and the printing command based on the analysis, if the receipt data contains the code.

In accordance with the present invention, the sales data processing apparatus includes the printing command in the receipt data of one purchase transaction, converts the receipt data into structured electronic receipt, and then outputs the converted electronic receipt to the external device for example an electronic receipt management server. The external device sends the electronic receipt associated with the customer code of a consumer to another external device, for example a portable terminal, associated with the customer code of the consumer after converting the electronic receipt to the receipt printing format based on the printing command contained in the electronic receipt. The electronic receipt is displayed after the printing command (character size (magnification/reduction) designation or character color designation, Chinese characters double size character designation, underline designation and the like) relating to the printing of the paper receipt is modified to the original receipt printing format. As a result, the customer may not feel a different impression between the electronic receipt and the paper receipt.

The present invention further relates to method for processing sales data, comprising: performing a process to acquire a customer code of a consumer involved in a transaction; generating receipt data which contains the customer code and indicates details of the transaction, if the customer code is acquired, and receipt data which does not contain the customer code, if the customer code is not acquired; if the receipt data does not contain the customer code, outputting the receipt data according to a printing command relating to the printing of the receipt data; and if the receipt data contains the customer code, converting the receipt data and the printing command into structured electronic receipt information and then outputting the converted information to an external device.

### BRIEF DESCRIPTION OF THE DRAWINGS

Fig. 1 illustrates a whole configuration of an electronic receipt system according to an embodiment.
Fig. 2 is a block diagram of a POS terminal in the electronic receipt system.
Fig. 3 is a block diagram of an electronic receipt server in the electronic receipt system.
Fig. 4 is a block diagram of an electronic receipt management server in the electronic receipt system.
Fig. 5 is a block diagram of a portable terminal in the electronic receipt system.
Fig. 6 illustrates functional blocks generated in the POS terminal for performing electronic receipt processing.
Fig. 7 illustrates an example of an image of receipt data.
Fig. 8 illustrates an example of data of an electronic receipt.
Fig. 9 is a flowchart illustrating electronic receipt processing carried out by the POS terminal.
Fig. 10 is a flowchart illustrating electronic receipt management processing and information sending processing carried out by the electronic receipt server.
Fig. 11 illustrates functional blocks generated in the electronic receipt server for performing the electronic receipt management processing and the commodity information sending processing.
Fig. 12 is a flowchart illustrating electronic receipt management processing and commodity information sending processing carried out by the electronic receipt management server.
Fig. 13 illustrates functional blocks generated in the portable terminal for performing the electronic receipt reception processing and the electronic receipt browsing processing.
Fig. 14 is a flowchart illustrating electronic receipt reception processing and electronic receipt browsing processing carried out by the portable terminal.
Fig. 15 illustrates an example of the electronic receipt displayed on a display unit of the portable terminal.

### DETAILED DESCRIPTION

In accordance with one embodiment, a sales data processing apparatus includes a module configured to acquire a customer code of a consumer involved in a transaction, a data generation module configured to generate receipt data which contains the customer code and indicates details of the transaction, if the customer code is acquired, and receipt data which does not contain the customer code, if the customer code is not acquired, and an output module. The output module is configured to output the receipt data according to a printing command relating to the printing of the receipt data if the receipt data does not contain the customer code, and convert the receipt data and the printing command into structured electronic receipt information and then output the converted information to an external device if the receipt data contains the customer code.

Hereinafter, an embodiment is described in detail with reference to the accompanying drawings.

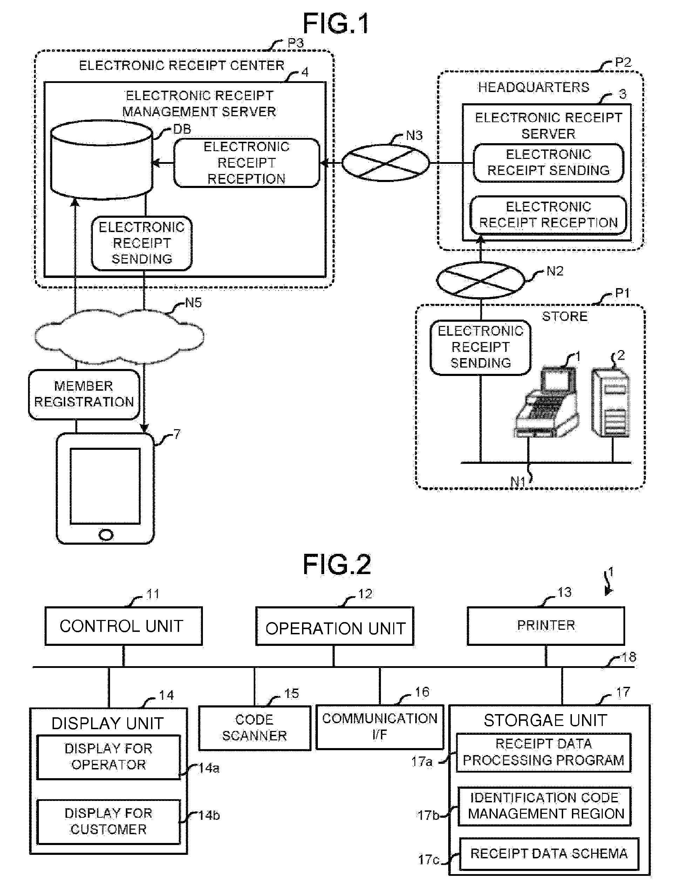

Fig. 1 illustrates a whole configuration of an electronic receipt system according to the embodiment. As shown in Fig. 1, the electronic receipt system includes a POS (Point of Sales) terminal 1, a store server 2, an electronic receipt server 3, an electronic receipt management server 4, and a portable terminal 7.

The POS terminal 1 and the store server 2 are located in a store P1. The POS terminal 1 and the store server 2 are connected and capable of communicating with each other through an in-store network N1 such as a Local Area Network (LAN) and the like. The POS terminal 1 and the store server 2 are configured to be connected, through a network device (not shown) such as a router connected to the in-store network N1, to a network N2 that connects the store P1 and a headquarters P2. The network N2 may be, for example, a dedicated line such as an internet or a Virtual Private Network (VPN).

The POS terminal 1 is a commodity sales data processing apparatus and executes commodity sales data processing. The POS terminal 1 generates receipt data containing content of a purchase transaction and prints the receipt data as a paper receipt using a printer 13. The POS terminal 1 further outputs (sends) an electronic receipt obtained by converting the data format of the receipt data, to the electronic receipt server 3 through the network N2. There is no specific limitation as to the method of sending the electronic receipt, and for example, a general-purpose protocol such as an HTTP or an HTTPS may be used. Further, there is no specific limitation as to the number of the POS terminals 1 provided in the store P1. For example, a plurality of POS terminals 1 may be provided in the store P1.

The store server 2 manages the commodity sales data processing carried out by the POS terminal 1. For example, the store server 2 stores/manages the commodity sales data generated through the commodity sales data processing carried out by the POS terminal 1, and a commodity data file used during the commodity sales data processing.

Although in the present embodiment, the POS terminal 1 outputs the electronic receipt, it is not limited to this configuration. For example, the data format of the receipt data generated by the POS terminal 1 may be converted by the store server 2 or a conversion device (not shown), and then the converted data may be output to the electronic receipt server 3 as the electronic receipt.

The electronic receipt server 3, which is located in the headquarters P2 of a company that runs one or more store P1 or chain stores functions as a receipt management server for the company. The electronic receipt server 3 includes, for example, a sales management function, a sales analysis function, a stock management function, and the like, for the company that runs the stores P1.

The electronic receipt server 3 receives the electronic receipt sent from the POS terminal 1 through the network N2, and then sends the received electronic receipt to the electronic receipt management server 4 through a network N3, which connects the headquarters P2 and an electronic receipt center P3.

Herein, the network N3 may be, for example, a dedicated line such as an internet or a VPN. There is no specific limitation as to the method of sending the electronic receipt, and, for example, a general-purpose protocol such as an HTTP or an HTTPS may be used.

The electronic receipt management server 4 is located in the electronic receipt center P3. The electronic receipt center P3 is, for example, a third party organization other than the company that manages the receipt data using the electronic receipt server 3. Alternatively, the electronic receipt server 3 may be managed by the third party organization.

The electronic receipt management server 4 functions as a receipt management server for customer and collectively manages the receipt data of multiple companies each of which runs one or more stores P1. The electronic receipt management server 4 stores/manages, in a member master file stored in a database DB, member data such as the name and the member code of each customer (member) who carried out member registration, and sending destination information (for example, mail address) associated with the portable terminal 7 to which the electronic receipt is to be sent. Alternatively, separately from the electronic receipt management server 4, a member management server and the like for storing/managing the member data may be provided.

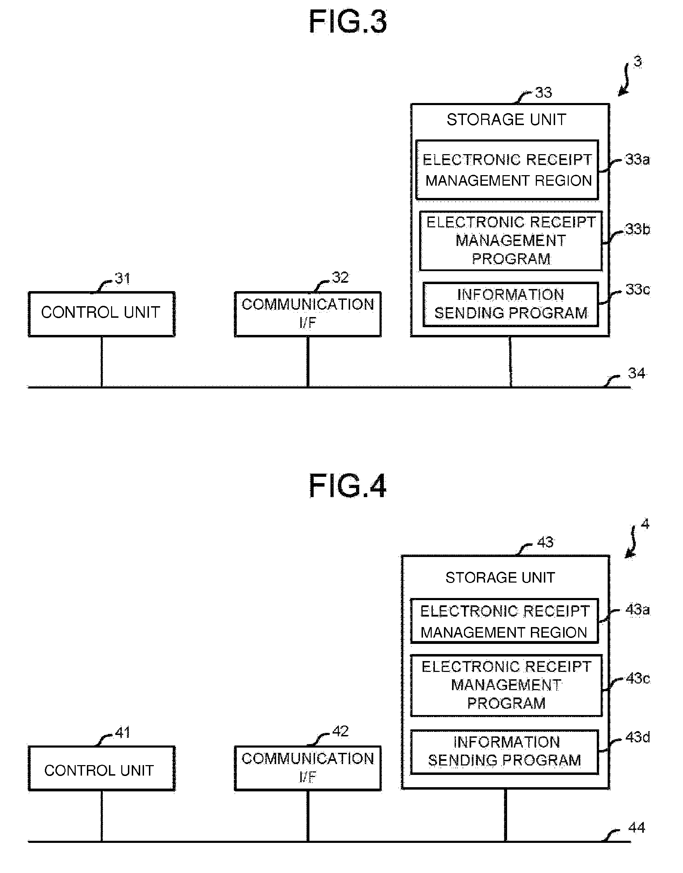

The electronic receipt management server 4 receives the electronic receipt sent from the electronic receipt server 3 through the network N3 and then stores/manages the received electronic receipt in an electronic receipt management region 43a (see Fig. 4) in the database DB. The electronic receipt includes a member code and the like in addition to the content (commodity sales data) of the purchase transaction, and is managed in association with the member data of the corresponding member.

After the electronic receipt is stored in the database DB, the electronic receipt management server 4 specifies the sending destination (portable terminal 7) with reference to the sending destination information associated with the member code contained in the electronic receipt. Then the electronic receipt management server 4 sends the electronic receipt stored in the database DB to the sending destination through a network N5.

The electronic receipt management server 4, if receiving an electronic receipt inquiry designating the member code from the portable terminal 7 connected through the network N5, extracts the electronic receipt corresponding to the member code from the database DB and sends the electronic receipt to the portable terminal 7.

The portable terminal 7 is a terminal device, such as a smartphone, a mobile phone, a PDA (Personal Digital Assistant), or a tablet computer, used by the user (customer) of the present electronic receipt system. The portable terminal 7 is equipped with an application such as a Web browser for browsing various kinds of information provided on the network N5. Further, a terminal device such as a PC may be used instead of the portable terminal 7.

The portable terminal 7 accesses the electronic receipt management server 4 through the network N5 to carry out member registration to the present electronic receipt system. Herein, the network N5 is an internet or various public networks.

In the present embodiment, the member registration of the customer in the present electronic receipt system is, for example, carried out according to the following procedure. The customer sends an empty mail from the portable terminal 7 to the electronic receipt management server 4 through the network N5. The electronic receipt management server 4 sends a URL (Uniform Resource Locator) of a webpage for member registration to the received mail address. The customer accesses the webpage for member registration from the portable terminal 7 using the received URL and inputs information (name, sending destination information, and the like) necessary for the member registration through a displayed input screen. After the customer inputs necessary information, the electronic receipt management server 4 executes member registration to the member master file. Sequentially, the electronic receipt management server 4 sends a member registration completion mail including a member code (customer code) and a password to the portable terminal 7. As a result, the member registration is completed.

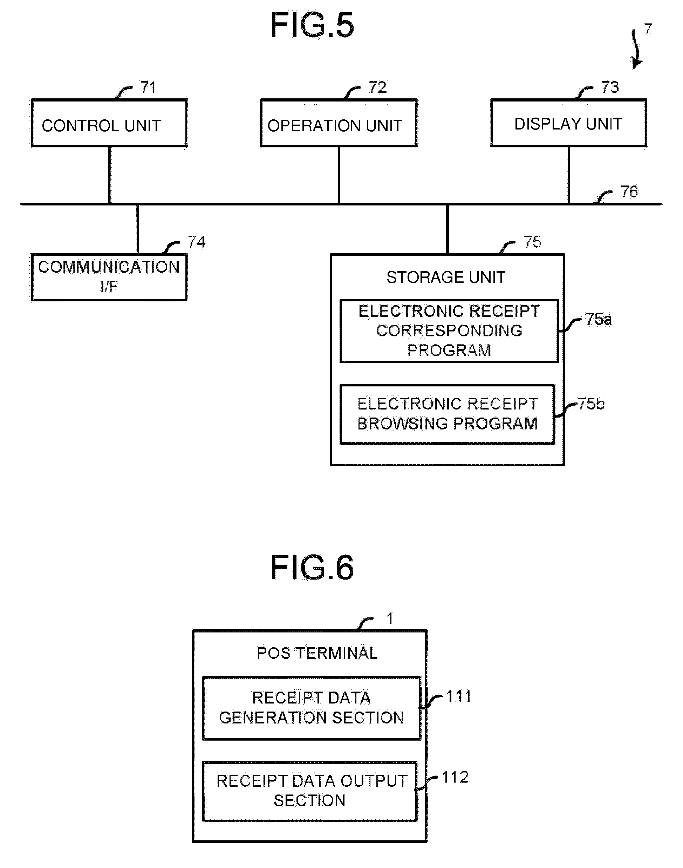

After the member registration is carried out, the portable terminal 7 displays the member code of the customer on a display unit 73 (see Fig. 5) as a code symbol such as a barcode or a two-dimensional code. The customer presents the code symbol displayed on the portable terminal 7 to a shop clerk when the purchase transaction is carried out in the store P1. The shop clerk scans the code symbol displayed on the portable terminal 7 using a code scanner 15 (refer to Fig. 2) connected to the POS terminal 1. In this way, it is possible to associate the member code of the customer with the receipt data generated after the settlement process through the commodity sales data processing by the POS terminal 1.

The portable terminal 7 receives, through the network N5, the electronic receipt of the transaction from the electronic receipt management server 4 after the settlement (transaction) by the POS terminal 1. The portable terminal 7 may receive the electronic receipt from the electronic receipt management server 4, after sending an electronic receipt inquiry designating the member code to the electronic receipt management server 4 through the network N5. The portable terminal 7 displays the received electronic receipt on the display unit 73.

In the electronic receipt system according to the present embodiment, the electronic receipt (receipt data) indicating the content of the purchase transaction (settlement) generated through the commodity sales data processing carried out by the POS terminal 1 of the store P1 is sent to the electronic receipt management server 4 via the electronic receipt server 3 and then uploaded on the Web. The portable terminal 7, which is equipped with the Web browser, can designate the URL (Uniform Resource Locator) to download the receipt data uploaded on the Web to the portable terminal 7 and then display the downloaded receipt data with the Web browser. Further, a separate application may be installed in the portable terminal 7 to display the receipt data.

Next, the main components of the electronic receipt system according to the present embodiment are described.

First, the POS terminal 1 serving as the commodity sales data processing apparatus is described. Fig. 2 is a block diagram of the POS terminal 1. As shown in Fig. 2, the POS terminal 1 includes a control unit 11 which collectively controls various operations and each unit of the POS terminal 1. The control unit 11 includes a CPU (Central Processing Unit), an ROM (Read Only Memory) for storing various programs and data, an RAM (Random Access Memory) that temporarily stores various programs and stores various data in a rewritable manner, and an RTC (Real Time Clock) unit that indicates the current date and time.

The control unit 11 is connected to an operation unit 12, the printer 13, a display unit 14, and the code scanner 15, through a bus line 18.

The operation unit 12 includes various operation keys for an operator to carry out an input operation. The operation keys includes, for example, a numeric key for inputting numerals, a cursor key, a selection determination key for selecting a pre-determined item, a subtotal key for instructing the total price of commodities that are sales-registered in a purchase transaction, and a closing key for closing the purchase transaction.

The printer 13 prints a receipt, a journal, or the like. The printer 13 is equipped with a cutting mechanism (not shown) for cutting paper such as roll paper to be printed, and cuts the paper according to a cutting command.

The display unit 14, which is, for example, a liquid crystal display, displays various kinds of information such as name and price of the sales-registered commodity, and total price, change amount, and the like of one purchase transaction closed. The display unit 14 includes a display 14a for operator for displaying various kinds of information to a cashier and a display 14b for customer for displaying various kinds of information to a customer. The display unit 14 may be a touch panel, and in this case, the touch panel functions as the operation unit 12.

The code scanner 15 optically reads (scans) the code symbol such as a barcode or a two-dimensional code and the like. The code scanner 15 reads, for example, the code symbol printed on a commodity or the code symbol displayed on the portable terminal 7, and then outputs the information contained in the read code symbol to the control unit 11. The code symbol printed on the commodity contains a commodity code and the like for specifying the commodity. The code symbol displayed on the portable terminal 7 contains the member code (customer code) and the like for specifying the customer who carries the portable terminal 7.

The control unit 11, which is connected to a communication I/F (interface) 16 through the bus line 18, is configured to be connected to the in-store network N1 and the network N2 through the communication I/F 16.

The control unit 11 is also connected to a storage unit 17 through the bus line 18. The storage unit 17 is an auxiliary storage device such as a Hard Disk Drive (HDD) or a Solid State Drive (SSD) and the like. The storage unit 17 stores programs for executing various POS operations including the commodity sales data processing. The storage unit 17 further stores various data files relating to the commodity sales data processing, such as a commodity data file in which commodity data such as a commodity name, a commodity code, and a unit price and the like of each commodity are stored. The storage unit 17 stores a receipt data processing program 17a for carrying out the commodity sales data processing and processing relating to receipt data.

The storage unit 17 stores a POS number for identifying the POS terminal 1 of its own, a company code (identification code of a company running one or more stores), a business type/business style code, a store code of the store P1 in which the POS terminal 1 is located, and the like, in an identification code management region 17b. The business type/business style code is a code (classification code) for classifying the business type/business style (for example, a convenience store, a supermarket, a department store, a pharmacy, a restaurant and an eatery) of the store. Such a business type/business style can be changed freely according to the preference of a user (company). The company code and the business type/business style code may also be registered in the electronic receipt server 3.

The storage unit 17 further stores a receipt data schema 17c for recording conversion rules used when unstructured receipt data is converted into structured receipt data (hereinafter, referred to as electronic receipt).

Next, the configuration of the electronic receipt server 3, which functions as a receipt management server for company, is described with reference to the block diagram shown in Fig. 3. The electronic receipt server 3 includes a control unit 31 for collectively controlling various operations and each unit of the electronic receipt server 3. The control unit 31 includes a CPU, an ROM for storing various programs and data, an RAM that temporarily stores various programs and stores various data in a rewritable manner, and an RTC unit that indicates the current date and time, and the like.

The control unit 31 is configured to be connected to the network N2 and the network N3 through a communication I/F 32, which is connected to a bus line 34. The control unit 31 is connected to a storage unit33 through the bus line 34.

The storage unit 33 stores electronic receipts of a company that runs one or more stores P1, in an electronic receipt management region 33a. The electronic receipt contains a company code (identification code of a company running one or more stores), a business type/business style code, a store code, a member code of a customer, a POS number of a POS terminal 1, a receipt number, commodity sales data, and the like.

The storage unit 33 further stores an electronic receipt management program 33b for managing the electronic receipts stored in the electronic receipt management region 33a. The storage unit 33 also stores an information sending program 33c for sending the receipt data stored in the electronic receipt management region 33a to the electronic receipt management server 4.

Next, the configuration of the electronic receipt management server 4, which functions as a receipt management server for customer, is described with reference to the block diagram shown in Fig. 4. As shown in Fig. 4, the electronic receipt management server 4 includes a control unit 41 for collectively controlling various operations and each unit of the electronic receipt management server 4. The control unit 41 includes a CPU, an ROM for storing various programs and data, an RAM that temporarily stores various programs and stores various data in a rewritable manner, and an RTC unit that indicates the current date and time, and the like.

The control unit 41 is configured to be connected to the network N3, network N4, and the network N5, through a communication I/F 42, which is connected to a bus line 44. The control unit 41 is also connected to a storage unit 43 through the bus line 44.

In addition to a member master management region (not shown) for storing/managing the member master, the storage unit 43 further includes an electronic receipt management region 43a for storing the electronic receipt of multiple companies each of which runs one or more stores. Further, the electronic receipt management region 43a manages the electronic receipt of the multiple, with respect to each member.

The electronic receipt contains a member code, a company code (identification code of a company running one or more stores), a store code, a POS number of a POS terminal 1, a receipt number, commodity sales data (containing date and time data) and the like. Thus, it is possible for, for example, the consumer goods manufacturer and the like to acquire unique certification information of purchased commodities relating to the manufacturer from the electronic receipt under a specific condition (for example, limitation of specific company running a store, a specific region limitation, a specific time limitation and the like). The consumer goods manufacturer is a manufacturer of food, drinks, clothing, cosmetics, medicine, daily necessities and the like.

In addition to the member management program (not shown) for managing the member master in a member master region, the storage unit 43 further includes an electronic receipt management program 43c for managing additional information and the electronic receipt of each company in the additional information management region 43b and the electronic receipt management region 43a, respectively. The member master management region and the electronic receipt management region 43a correspond to the database DB shown in Fig. 1.

Next, the configuration of the portable terminal 7 is described with reference to the block diagram shown in Fig. 5. As shown in Fig. 5, the portable terminal 7 includes a control unit 71 for collectively controlling various operations and each unit of the portable terminal 7. The control unit 71 includes a CPU, an ROM for storing various programs and data, an RAM that temporarily stores various programs and stores various data in a rewritable manner, and an RTC unit that indicates the current date and time, and the like.

The control unit 71 is connected to an operation unit 72 and a display unit 73 through a bus line 76. The operation unit 72 includes various operation keys for a user (customer) to carry out an input operation and a pointing device. The display unit 73, which is, for example, a liquid crystal display and the like, displays various kinds of information such as the later-described electronic receipt and the like. The display unit 73 may be a touch panel, and in this case, the touch panel functions as the operation unit 72.

The control unit 71, which is connected to a communication I/F 74 through the bus line 76, is configured to be connected to the network N5 through the communication I/F 74. The control unit 71 may also be connected to the in-store network N1 through the communication I/F 74.

The control unit 71 is connected to a storage unit 75 through the bus line 76. In addition to a Web browser for the user to browse various kinds of information (contents) uploaded on the Web, the storage unit 75 further stores an electronic receipt corresponding program 75a for receiving the electronic receipt from the electronic receipt management server 4 and an electronic receipt browsing program 75b for the user to browse the received receipt data.

Next, the operation of each unit included in the electronic receipt system of the present embodiment is described.

First, the electronic receipt processing, which is executed through the operation of the control unit 11 of the POS terminal 1 according to the receipt data processing program 17a, is described with reference to Fig. 6-Fig. 9.

As shown in Fig. 6, when the receipt data processing program 17a is executed by the POS terminal 1, modules including a receipt data generation section (module) 111 and a receipt data output section (module) 112 are generated. As practical hardware, the CPU of the control unit 11 reads the receipt data processing program 17a from the storage unit 17 and executes the receipt data processing program 17a to load each section (module) described above to the RAM. As a result, the receipt data generation section 111 and the receipt data output section 112 are generated on the RAM.

The receipt data generation section 111 is a functional section corresponding to an existing application and mainly carries out the commodity sales data processing and the generation of printing data (receipt data) of the receipt. When the receipt data generation section 111 acquires the commodity code for specifying the commodity through the code scanner 15, the receipt data generation section 111 reads the commodity data corresponding to the acquired commodity code from the commodity data file, and calculates the price of the commodity based on the unit price contained in the commodity data. Then the receipt data generation section 111 generates commodity sales data processed during the commodity sales data processing, that is, the receipt data containing the content of the purchase transaction.

Further, if the receipt data generation section 111 acquires the member code for specifying the customer through the code scanner 15 at any timing during one purchase transaction, the receipt data generation section 111 includes the member code in the receipt data.

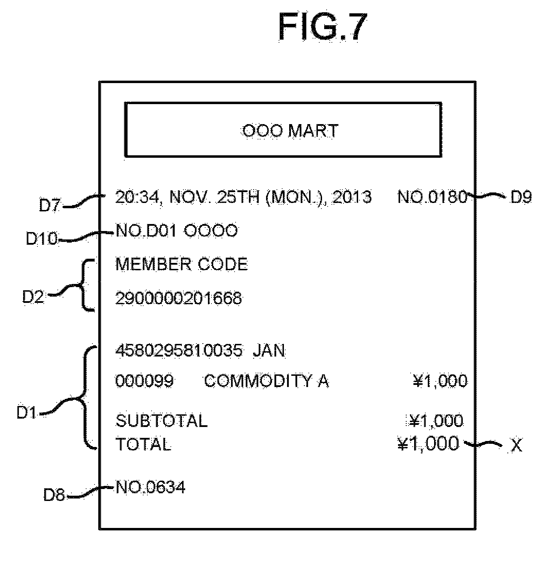

Fig. 7 illustrates an example an image of receipt data. The receipt data is unstructured text data and the like used for the printing carried out by the printer 13. As shown in Fig. 7, the receipt data contains elements of commodity sales data D1 and a member code D2. The commodity sales data D1 contains a commodity name (commodity code) and a quantity of the commodity subjected to the settlement processing, the total price of the purchased commodity, the deposit amount paid by the customer, the change amount, and the like.

Further, as shown in Fig. 7, a total price X of the commodity sales data D1 of the receipt data is displayed by characters in larger size compared with the quantity of the commodity, so as to make it stand out.

The receipt data further contains elements such as a transaction date and time D7, a transaction number (receipt number) D8, a register number D9, a name of the person in charge D10, and the like. The elements contained in the receipt data are not limited to the example shown in Fig. 7, and the receipt data may further contain other elements such as a company code (company name) indicating the company running the store, a store code (store name), a phone number, address, business type/business style code, and the like of the store.

If the closing key is pressed, the receipt data generation section 111 determines that the commodity sales data processing of one purchase transaction has been completed, and output (issues) the generated receipt data together with the cutting command to the receipt data output section 112. Herein, the cutting command, which is a generally-used printer control command, instructs the cutting of the paper on which the receipt data is printed. The receipt data may be generated collectively after the closing key is pressed, or generated sequentially every time the commodity code or customer code is acquired.

The receipt data output section 112 determines the output destination of the receipt data every time the receipt data of one purchase transaction is generated by the receipt data generation section 111. More specifically, the receipt data output section 112 determines that the receipt data of one purchase transaction is generated based on the cutting command issued by the receipt data generation section 111. Then the receipt data output section 112 determines whether or not the member code is contained in the generated receipt data, and then outputs the receipt data to the output destination according to the determination result.

Specifically, the receipt data output section 112, if it is determined that the member code is not contained in the receipt data, outputs the receipt data to the printer 13 together with the cutting command. Then, the printer 13 prints the receipt data on the paper, cuts the paper according to the cutting command, and outputs a paper receipt of one purchase transaction. At the time the paper receipt is printed, all the elements of the receipt data may be printed. Alternatively, other information such as advertisement and the like may be added to the receipt data and printed instead of the member code and the like.

The receipt data output section 112, if it is determined that the member code is contained in the receipt data, converts the receipt data into a pre-determined data format according to the conversion rules of the receipt data schema 17c. Then, the receipt data output section 112 sends (outputs) the receipt data of which the data format has been converted, that is, the electronic receipt, to the electronic receipt server 3 of a company having the corresponding company code.

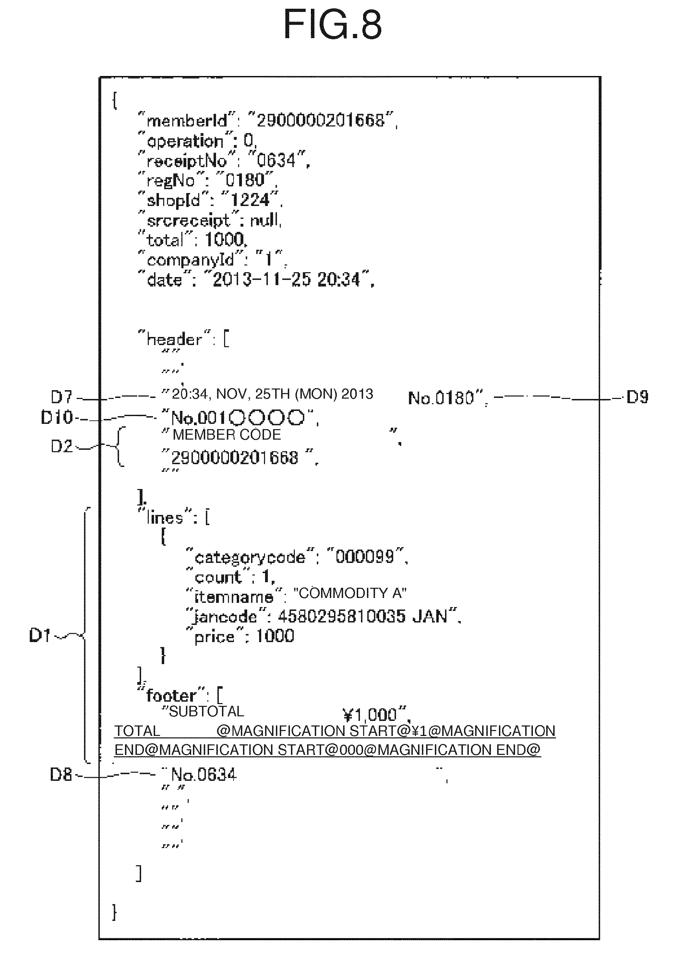

Fig. 8 schematically illustrates one example of an image of an electronic receipt. As shown in Fig. 8, the electronic receipt includes structured data (structured document) such as XML, CSV, JSON (JavaScript Object Notation) and the like. In Fig. 8, each element (D1-D2, D7-D10) of the receipt data shown in Fig. 7 is converted into the JSON format.

The conversion from the receipt data to the electronic receipt is carried out based on the conversion rules stored in the receipt data schema 17c. Specifically, pre-determined elements of the receipt data and attribution information (tag and the like) indicating the attribution of the elements are defined in the receipt data schema 17c. The receipt data output section 112 structures each element of the receipt data using the corresponding attribution information, and then generates the structured electronic receipt as shown in Fig. 8. By generating such a structured electronic receipt, the elements contained in the electronic receipt can be used efficiently. Therefore, various advantages can be obtained in the data management.

On a paper receipt, price such as a total price is often printed in larger characters compared with a quantity of the commodity so as to make it stand out. Further, on the paper receipt, characters such as the transaction content that are located at an upper portion of the paper receipt are often larger than the other characters.

In the POS terminal 1 according to the present embodiment, the receipt data output section 112 analyzes and structures the printing command (character size (magnification/reduction) designation or character color designation, Chinese characters double size character designation, underline designation, and the like) relating to the printing of the paper receipt, and generates the structured electronic receipt (as shown in Fig. 8) corresponding to the printing command.

Then, the receipt data output section 112 determines that the receipt data of one purchase transaction has been generated according to the issuing of the cutting command by the receipt data generation section 111, and starts the output of the receipt data. As there is no need to send a dedicated signal for instructing the completion of one purchase transaction from the receipt data generation section 111 to the receipt data output section 112, the output of the receipt data of one purchase transaction can be carried out by the receipt data output section 112 without any particular change in operations carried out by the receipt data generation section 111. Further, as the receipt data generation section 111 does not need to be changed, the function of outputting the electronic receipt can be achieved using the existing application.

Furthermore, the receipt data output section 112 determines the output destination of the receipt data according to whether or not the member code is contained in the receipt data. As the output of the paper receipt or the electronic receipt can be carried out without information indicating whether or not a paper receipt is requested by each customer, the output destination of the receipt data can be determined more efficiently. For example, the customer (member) can select the output of the paper receipt or the electronic receipt by inputting or not inputting the member code in each purchase transaction, which may lead to customer convenience.

In a case of outputting the receipt data to the electronic receipt server 3, the receipt data output section 112 converts the elements of the receipt data into the structured electronic receipt and then outputs the electronic receipt. As the elements of the electronic receipt can be used efficiently, data of the electronic receipt can be used more efficiently by the electronic receipt server 3 and the electronic receipt management server 4 for managing the electronic receipt and by the portable terminal 7 for displaying the electronic receipt.

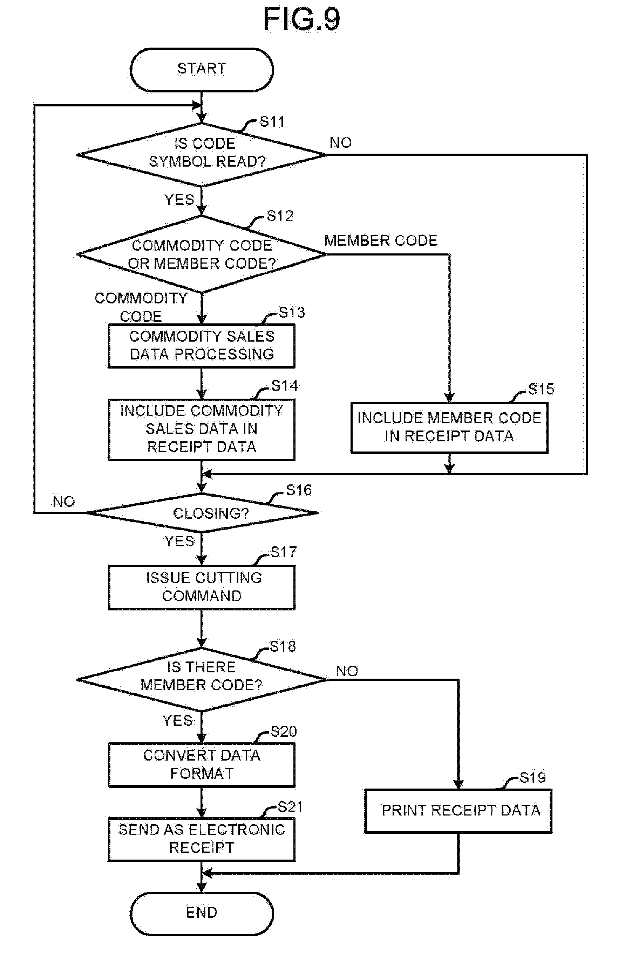

Fig. 9 is a flowchart illustrating the electronic receipt processing carried out by the POS terminal 1. First, the receipt data generation section 111 of the POS terminal 1 determines whether or not the code symbol (commodity code) printed on the commodity or the code symbol (member code) displayed on the portable terminal 7 is read by the code scanner 15 (ACT S11). If the code symbol is not read (NO in ACT S11), the receipt data generation section 111 executes the processing in ACT S16.

On the other hand, the receipt data generation section 111, if it is determined that the code symbol is read (YES in ACT S11), determines whether the information obtained through the reading processing is the commodity code or the member code (ACT S12).

In ACT S12, if the commodity code is acquired ("commodity code" in ACT S12), the receipt data generation section 111 reads the commodity data of the commodity specified with the commodity code from the commodity data file, and calculates the price based on the unit price contained in the commodity data (ACT S13). Next, the receipt data generation section 111 generates the receipt data containing the commodity sales data processed through the commodity sales data processing (ACT S14).

Further, if the member code is acquired in ACT S12 ("member code" in ACT S12), the receipt data generation section 111 includes the member code in the receipt data (ACT S15).

Herein, in order to input the member code to the POS terminal 1, for example, the customer (member) presents the code symbol containing the member code and the like displayed on the display unit 73 of the portable terminal 7, and the shop clerk or the customer (member) himself/herself scans the code symbol using the code scanner 15 of the POS terminal 1. The receipt data generation section 111 may also carry out exclusive processing so that only one member code is associated with the purchase transaction when two or more member codes are input during one purchase transaction.

Next, in ACT S16, the receipt data generation section 111 determines whether or not the start of the closing processing is instructed by a pressing operation of the closing key (ACT S16). If the start of the closing processing is not instructed (NO in ACT S16), the processing in ACT S11 is carried out again. If the start of the closing processing is instructed (YES in ACT S16), the receipt data generation section 111 issues (outputs) the cutting command to the receipt data output section 112 (ACT S17).

When the receipt data output section 112 receives the cutting command from the receipt data generation section 111, the receipt data output section 112 determines that the receipt data of one purchase transaction has been generated, and then determines whether or not the member code is contained in the receipt data (ACT S18).

If the member code is not contained in the receipt data (NO in ACT S18), the receipt data output section 112 outputs the receipt data of one purchase transaction together with the cutting command to the printer 13 to print the receipt data (ACT S19), and then the processing is terminated. Then, the paper is cut according to the cutting command after the receipt data is printed on the paper in the printer 13, and as a result the paper receipt of one purchase transaction is output.

On the other hand, if the member code is contained in the receipt data (YES in ACT S18), the receipt data output section 112 converts the data format of the unstructured receipt data into the structured data format as the electronic receipt (ACT S20). Then, the receipt data output section 112 sends the generated electronic receipt to the electronic receipt server 3 through the communication I/F 16 (ACT S21), and then the processing is terminated.

In the processing described above, the receipt data is output to the electronic receipt server 3 when the member code is contained in the receipt data. However, the present embodiment is not limited to this processing. The receipt data containing the member code may be output to both the printer 13 and the electronic receipt server 3.

Further, the output destination of the receipt data may be selectable by the customer or by the shop clerk, when the member code is contained in the receipt data. For example, output classification information for designating the output destination of the receipt data may be contained in a code symbol CS displayed on the portable terminal 7, and the output destination can be selected based on the output classification information. In this case, the receipt data generation section 111 includes the output classification information read by the code scanner 15 into the receipt data together with the member code. Then the receipt data output section 112, if it is determined that both the member code and the output classification information are contained in the receipt data, determines the output destination of the receipt data based on the output classification information. The output classification information is capable of designating either one or both of the printer 13 and the electronic receipt server 3.

The output destination of the receipt data may be selected every time the settlement of commodity is carried out. In this case, for example, the receipt data output section 112, if it is determined that the member code is contained in the receipt data, displays an output destination selection screen for selecting the output destination of the receipt data on the display unit 14.

The selection screen may be either one or both of the display 14a for operator and the display 14b for customer. Further, when the display 14b for customer is a touch panel the output destination may be selected by the customer.

Further, the output destination of the receipt data may be selected by the customer during the commodity sales data processing. In this case, the receipt data generation section 111 displays an output destination selection screen G1 and the like on the display unit 14, and includes the selected output destination in the receipt data as the output classification information. Then the receipt data output section 112 determines, if both the member code and the output classification information are contained in the receipt data, the output destination of the receipt data based on the output classification information.

As described above, the receipt data output section 112 may automatically select the output destination of the receipt data based on whether or not the member code is contained in the receipt data, or receive a manual selection of the output destination. In this manner, the output destination determination method can be set flexibly.

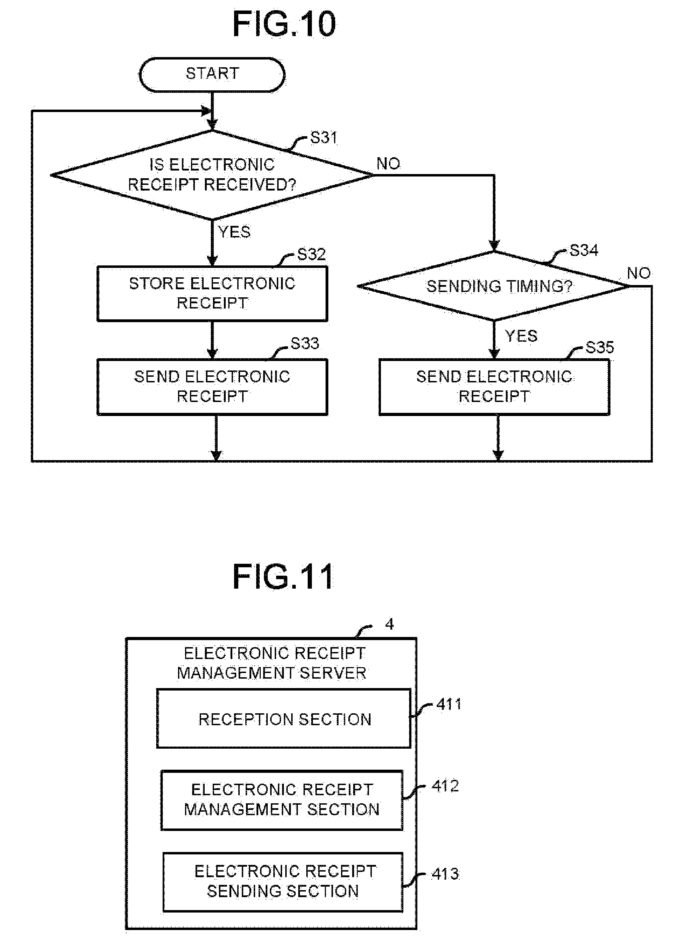

Next, the flow of electronic receipt management processing performed when the control unit 31 of the electronic receipt server 3 executes the electronic receipt management program 33b and the flow of information sending processing performed when the control unit 31 executes the information sending program 33c are described with reference to the flowchart shown in Fig. 10.

If the electronic receipt sent from the POS terminal 1 is received through the communication I/F 32 (YES in ACT S31), the control unit 31 of the electronic receipt server 3 stores the electronic receipt in the electronic receipt management region 33a of the storage unit 33 (ACT S32). Then the control unit 31 of the electronic receipt server 3 sends the electronic receipt stored in ACT S32 to the electronic receipt management server 4 (ACT S33), and then the process goes back to ACT S31.

When a preset sending timing comes (NO in ACT S31→YES in ACT S34), the control unit 31 of the electronic receipt server 3 sends the electronic receipt stored in the electronic receipt management region 33a to the electronic receipt management server 4 (ACT S35), and then the process goes back to ACT S31. Through the sending processing of ACT S35, the electronic receipt omitted from the sending target in ACT S33 can be sent to the electronic receipt management server 4. Only electronic receipt that has not been successfully sent may be sent in ACT S35.

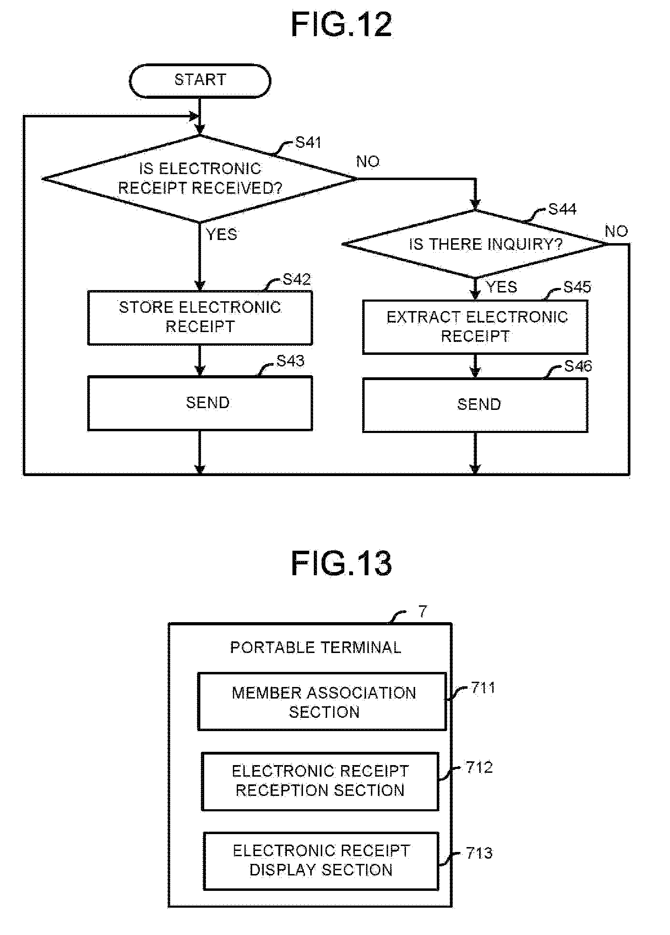

Next, the flow of electronic receipt management processing performed when the control unit 41 of the electronic receipt management server 4 executes the electronic receipt management program 43c and the flow of commodity information sending processing performed when the control unit 41 executes the information sending program 43d are described with reference to the functional block diagram shown in Fig. 11 and the flowchart shown in Fig. 12.

As shown in Fig. 11, when the electronic receipt management program 43c and the information sending program 43d are executed by the electronic receipt management server 4, modules including a reception section (module) 411, an electronic receipt management section (module) 412, and an electronic receipt sending section 413 are generated. As practical hardware, the CPU of the control unit 41 reads and executes the electronic receipt management program 43c and the information sending program 43d from the storage unit 43 and loads each section (module) described above onto the RAM. As a result, the reception section 411, the electronic receipt management section 412, and the electronic receipt sending section 413 are generated on the RAM.

The reception section 411 receives the electronic receipts of multiple companies, each of which contains a company code indicating the corresponding company and has been electronically processed, from the electronic receipt server 3, instead of a paper receipt issued during the commodity sales data processing.

The electronic receipt management section 412 stores and manages the electronic receipts of the multiple companies received by the reception section 411 in the electronic receipt management region 43a of the storage unit 43.

The electronic receipt sending section 413 acquires the electronic receipt, which is associated with member code and contains at least one company code, from the electronic receipt management region 43a, and then sends the acquired electronic receipt to the portable terminal 7 associated with the member code of a specific customer.

As shown in Fig. 12, the reception section 411 of the electronic receipt management server 4 determines whether or not the electronic receipt sent from the electronic receipt server 3 of each company is received through the communication I/F 42 (ACT S41).

If the electronic receipt is received (YES in ACT S41), the electronic receipt management section 412 of the electronic receipt management server 4 stores the electronic receipt of each company in the electronic receipt management region 43a of the storage unit 43 (ACT S42). Next, the electronic receipt sending section 413 sends the electronic receipt stored in ACT S42 to the sending destination (portable terminal 7) managed in association with the member code contained in the electronic receipt (ACT S43), and then the process goes back to ACT S41.

On the other hand, if there is an electronic receipt inquiry from the portable terminal 7 (NO in ACT S41→YES in ACT S44), the electronic receipt sending section 413 of the electronic receipt management server 4 extracts the electronic receipt stored in the electronic receipt management region 43a according to the content of the electronic receipt inquiry (ACT S45), and then sends the extracted electronic receipt to the portable terminal 7 which has sent the inquiry (ACT S46). Then, the process goes back to ACT S41.

Next, the flow of electronic receipt reception processing performed when the control unit 71 of the portable terminal 7 executes the electronic receipt corresponding program 75a and the flow of electronic receipt browsing processing performed when the control unit 71 executes the electronic receipt browsing program 75b are described with reference to Fig. 13-Fig. 15.

As shown in Fig. 13, when the electronic receipt corresponding program 75a and the electronic receipt browsing program 75b are executed by the portable terminal 7, modules including a member association section (module) 711, an electronic receipt reception section (module) 712, and an electronic receipt display section (module) 713 are generated. As practical hardware, the CPU of the control unit 71 reads and executes the electronic receipt corresponding program 75a and the electronic receipt browsing program 75b from the storage unit 75 and loads each section (module) described above onto the RAM. As a result the member association section 711, the electronic receipt reception section 712, and the electronic receipt display section 713 are generated on the RAM.

The member association section 711 associates the member code of a specific customer with the portable terminal 7. The electronic receipt reception section 712 receives the electronic receipt from the electronic receipt management server 4. The electronic receipt display section 713 operates to display the electronic receipt received by the electronic receipt reception section 712 on the display unit 73.

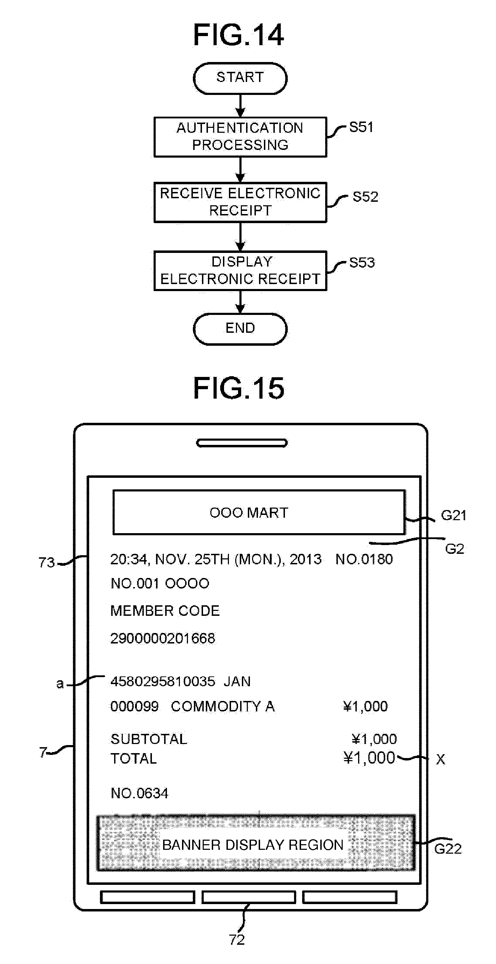

As shown in Fig. 14, first, the member association section 711 of the portable terminal 7 accesses the electronic receipt management server 4 and inputs the member code and the password to execute authentication processing (ACT S51). As a result, the portable terminal 7 is associated with the member code of the specific customer.

After the authentication, the electronic receipt reception section 712 of the portable terminal 7 receives the electronic receipt corresponding to the input member code, which is stored in the electronic receipt management region 43a of the electronic receipt management server 4(ACT S52). Here, the receipt data may be received through an E-mail.

Next, the electronic receipt display section 713 of the portable terminal 7 operates to display the electronic receipt and the like received by the electronic receipt reception section 712 on the display unit 73 (ACT S53), and then the processing is terminated.

Fig. 15 illustrates one example of an electronic receipt G2 displayed on the display unit 73 of the portable terminal 7. As shown in Fig. 15, the electronic receipt G2 is displayed in such a manner that the layout and the content thereof are the same as a paper receipt printed on paper. In addition, in the present embodiment, the electronic receipt G2 is displayed after the printing command (character size (magnification/reduction) designation or character color designation, Chinese characters double size character designation, underline designation and the like) relating to the printing of the paper receipt is modified to the original receipt printing format. In the example shown in Fig. 15, the magnified characters of the total amount X of the receipt are modified to the original receipt printing format.

In the electronic receipt G2, "commodity a", which is a purchased commodity, can be selected using the cursor that follows the input through the operation unit 72. In the example shown in Fig. 15, the electronic receipt G2 contains a store name logo region G21 for displaying the logo of the store name and a banner display region G22 for displaying an advertisement and the like.

In the present embodiment, the display form of the receipt data may not correspond to the image of the receipt printed on paper. However, the receipt data, as a substitute of the paper receipt, should be a proof of a purchase transaction. The receipt, to be the proof of a purchase transaction contains the following information:
- store name
- purchase date and time
- details of purchased commodity
- total price
- deposit amount
- change amount
- register number
- transaction number

When a plurality of receipt data is received, the display unit 73 of the portable terminal 7 may display a screen to select one of the receipt data based on the purchase date, the company code, and the like contained in the receipt data. In this case, the electronic receipt display section 713 operates to display the receipt data selected through the selection screen on the display unit 73.

As described above, in accordance with the present embodiment, the POS terminal 1 includes the printing command in the receipt data of one purchase transaction, converts the receipt data into structured electronic receipt, and then outputs the converted electronic receipt to the electronic receipt management server 4. The electronic receipt management server 4 sends the electronic receipt associated with the member code to the portable terminal 7 associated with the member code of the consumer after converting the electronic receipt to the receipt printing format based on the printing command contained in the electronic receipt. The electronic receipt is displayed after the printing command (character size (magnification/reduction) designation or character color designation, Chinese characters double size character designation, underline designation and the like) relating to the printing of the paper receipt is modified to the original receipt printing format. As a result, the customer may not feel a different impression between the electronic receipt and the paper receipt.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

Although in the embodiment described above the member code and the like are acquired through the code scanner 15, the present invention is not limited to this configuration. For example, the member code and the like may be acquired through other methods. Specifically, a near-distance wireless communication, such as a NFC (Near Field Communication), a Bluetooth (registered trademark) and the like, may be used by the POS terminal 1 and the portable terminal 7, and the member code and the like may be transmitted and received using near-distance wireless communication. In this case, the portable terminal 7 may store the member code and the like in the storage unit 75 or an IC tag (not shown) and the like.

Although in the embodiment described above, the member code and the like are acquired from the portable terminal 7, the present invention is not limited to this. For example, the member code may be acquired from a medium, such as an IC card or a magnetic card and the like, that can store the member code. When an IC card is used, the POS terminal 1 may have a reading/writing unit such as an IC card reader/writer. When a magnetic card is used, the POS terminal 1 may have a card reader/card writer of the magnetic card.

Although, in the embodiment described above, the electronic receipt server 3 is located in the headquarters P2, the present invention is not limited to this configuration. For example, the electronic receipt server 3 for store may be located in the store P1. In this case, the POS terminal 1 may output electronic receipt to the electronic receipt server 3 connected to the in-store network N1 thereof, and the electronic receipt server 3 may send the electronic receipt to the electronic receipt management server 4 through the in-store network N1 and the network N2.

Although, in the embodiment described above, the electronic receipt generated by the POS terminal 1 is output to the electronic receipt management server 4 via the electronic receipt server 3, the present invention is not limited to this configuration. For example, the electronic receipt may be output directly to the electronic receipt management server 4 upon an access to the electronic receipt management server 4 from the POS terminal 1 through the network N3.

Although, in the embodiment described above, the portable terminal 7 receives the electronic receipt via the electronic receipt management server 4, the present invention is not limited to this configuration. For example, the portable terminal 7 may receive the electronic receipt directly from the POS terminal 1. In this case, the POS terminal 1 may output the generated electronic receipt to the portable terminal 7 connected through the in-store network N1 or using near-distance wireless communication (not shown). In this case, the authentication processing may be carried out by the POS terminal 1.

Furthermore, in the embodiment described above, the commodity data file is stored in the POS terminal 1; however, the present invention is not limited to this. For example, the commodity data file may be stored in the store server 2 in a referable manner from the POS terminal 1.

## Claims

1. A sales data processing apparatus comprising:
a module configured to acquire a customer code of a consumer involved in a transaction;
a data generation module configured to generate receipt data which contains the customer code and indicates details of the transaction, if the customer code is acquired, and receipt data which does not contain the customer code, if the customer code is not acquired; and
an output module configured to output the receipt data according to a printing command relating to the printing of the receipt data if the receipt data does not contain the customer code, and convert the receipt data and the printing command into structured electronic receipt information and then output the converted information to an external device if the receipt data contains the customer code.

2. The sales data processing apparatus according to claim 1, wherein
the output module is further configured to analyze the printing command, which designates a character size of one or more characters in the receipt data, and convert the receipt data and the printing command based on the analysis, if the receipt data contains the customer code.

3. The sales data processing apparatus according to claim 1, wherein
the output module is further configured to analyze the printing command, which designates a color of one or more characters in the receipt data, and convert the receipt data and the printing command based on the analysis, if the receipt data contains the code.

4. The sales data processing apparatus according to claim 1, wherein
the output module is further configured to analyze the printing command, which commands to underline one or more characters in the receipt data, and convert the receipt data and the printing command based on the analysis, if the receipt data contains the code.

5. A method for processing sales data, comprising:
performing a process to acquire a customer code of a consumer involved in a transaction;
generating receipt data which contains the customer code and indicates details of the transaction, if the customer code is acquired, and receipt data which does not contain the customer code, if the customer code is not acquired;
if the receipt data does not contain the customer code, outputting the receipt data according to a printing command relating to the printing of the receipt data; and
if the receipt data contains the customer code, converting the receipt data and the printing command into structured electronic receipt information and then outputting the converted information to an external device.

6. The method for processing sales data according to claim 5, said outputting the receipt data further comprising :
- analyzing the printing command, which designates a character size of one or more characters in the receipt data; and
- converting the receipt data and the printing command based on the analysis, if the receipt data contains the customer code.

7. The method for processing sales data according to claim 5, said outputting the receipt data further comprising:
- analyzing the printing command, which designates a color of one or more characters in the receipt data; and
- converting the receipt data and the printing command based on the analysis, if the receipt data contains the code.

8. The method for processing sales data according to claim 5, said outputting the receipt data further comprising:
- analyzing the printing command, which commands to underline one or more characters in the receipt data; and
- converting the receipt data and the printing command based on the analysis, if the receipt data contains the code.
